# FASCICULE DE BREVET EUROPEEN

(11) **EP 0 592 599 B1**
(45) Date de publication et mention de la délivrance du brevet: **11.10.1995**
(21) Numéro de dépôt: 92915827.7
(22) Date de dépôt: 03.07.1992
(51) Int. Cl.: H02P 6/00, F16H 25/22, F16H 19/02

(54) **VERIN ELECTRIQUE A SYSTEME DE CONVERSION DE MOUVEMENT ROTATION/TRANSLATION ET A RECUPERATION D'ENERGIE**
ELEKTRISCHER WANDLER UM ROTATIVE IN LINEARE BEWEGUNG UMZUSETZEN MIT ENERGIERÜCKGEWINNUNG
ELECTRICAL ACTUATOR HAVING A ROTATIONAL/TRANSLATIONAL MOTION CONVERSION SYSTEM AND POWER RECOVERY

(30) Priorité: 03.07.1991 FR 9108310
(43) Date de publication de la demande: 20.04.1994
(73) Titulaire: COMMISSARIAT A L'ENERGIE ATOMIQUE, 75015 Paris Cédex 15 (FR)
(72) Inventeur: GARREC, Philippe, F-91370 Verrière-le-Buisson (FR)
(74) Mandataire: Dubois-Chabert, Guy
(86) Numéro de dépôt international: FR9200633
(87) Numéro de publication internationale: WO9301652

(56) Documents cités:
- EP-A- 0 253 735
- CH-A- 586 583
- US-A- 4 733 146
- MACHINE DESIGN, vol. 62, no. 10, 24 Mai 1990, CLEVELAND, US, pages 50-55 ; PAUL DVORAK : 'Electric cylinders push into fluid power territory'
- PATENT ABSTRACTS OF JAPAN, vol. 11, no. 125 (M-582), 18 Avril 1987; & JP-A-61266862
- MACHINE DESIGN, vol. 40, no. 12, 23 Mai 1968, CLEVELAND, US, page 162; 'Canted Rollers Vary Drive Screw Pitch'
- DESIGN ENGINNEERING, Novembre 1983, LONDON, GB, page 24; 'Ball nut converts rotary to linear motion on plain shaftings'
- PATENT ABSTRACTS OF JAPAN, vol. 4, no. 170 (E-35)(652), 22 Novembre 1990; & JP-A-55117473

## Description

### DOMAINE DE L'INVENTION

L'invention concerne de manière générale le domaine de la robotique, où des vérins sont utilisés pour faire mouvoir entre eux des éléments articulés ou pour déplacer des charges linéairement, tels que les bras ou les membres d'un robot. Une première application principale est prévue pour des robots autonomes du type marcheur ou du type à suspension contrôlée dynamiquement. L'invention concerne en particulier un vérin électrique à système de conversion de mouvement rotation/translation et à récupération d'énergie, par exemple du type vis/écrou à billes.

### ART ANTERIEUR ET PROBLEME POSE

Parmi les éléments moteurs utilisés pour actionner les robots, on peut citer les vérins hydrauliques et les vérins électriques. On s'intéresse de plus en plus aux vérins électriques car les vérins hydrauliques nécessitent beaucoup d'accessoires pour leur fonctionnement et entrainent quelques inconvénients dus à l'utilisation de fluides comme éléments de transmission.

Parmi les vérins électriques, on utilise les moteurs linéaires. Ceux-ci ont un rapport force/masse trop faible pour pouvoir être souvent utilisés dans la construction des machines. De plus, leur rendement est souvent faible.

On utilise également depuis longtemps le système vis/écrou pour transformer une énergie mécanique de rotation fournie par un moteur électrique en une énergie mécanique de translation. Le système vis/écrou étant très ancien, de nombreux perfectionnements ont déjà été apportés à ce système. Ainsi, de nombreux vérins électriques fonctionnent avec un système vis/écrou à billes, c'est-à-dire que l'écrou est monté sur la vis par l'intermédiaire de billes, un peu de manière analogue à la bague externe d'un palier à roulement à billes qui est monté sur la bague interne par l'intermédiaire de quelques billes. Ces dernières sont logées dans un ou plusieurs filets de la vis et sont maintenues à l'intérieur de l'écrou.

Avec de tels vérins électriques utilisant un système vis/écrou à billes, il est ainsi possible de fournir un mouvement de translation avec une force déterminée, le moteur électrique pouvant être asservi à la position de l'écrou ou de la force à fournir. Toutefois, dans ce type de système vis/écrou à billes, l'angle d'inclinaison du filet de la vis est faible pour permettre au vérin de fournir une force suffisante. Cette disposition limite la vitesse de translation de l'écrou et a pour inconvénient supplémentaire de ne pas être ou d'être peu réversible mécaniquement. En effet, en faisant tourner une vis dont l'angle d'inclinaison du filet est faible, il est facile de déplacer l'écrou qui est vissé sur celle-ci. Par contre, il est de manière générale très difficile, voire même impossible, de faire tourner la vis en poussant ou tirant l'écrou. Or, de tels vérins sont utilisés pour déplacer des charges relativement importantes auxquelles est lié l'écrou. Lorsque ce dernier a atteint sa vitesse maximale sur la vis, lors de l'actionnement du vérin, il a également acquis une énergie cinétique souvent considérable, due notamment à la charge qu'il entraîne. L'irréversibilité du système vis/écrou à faible angle empêche donc de restituer à la vis l'énergie cinétique emmagasinée par le système écrou/charge, lorsque la vis n'entraîne plus l'écrou.

Le but de l'invention est de proposer un vérin, par exemple du type vis/écrou à billes, dans lequel on récupère une partie de l'énergie mécanique communiquée à l'écrou.

### RESUME DE L'INVENTION

A cet effet, l'objet principal de l'invention est un vérin électrique comprenant au moins un moteur électrique rotatif qui entraîne en rotation un système de transformation de mouvement rotation/translation pour translater une pièce de translation telle qu'un écrou, des moyens de commande du moteur pour entraîner le système de transformation de mouvement avec des phases d'accélération et de décélération, caractérisé en ce qu'il comprend des moyens de récupération d'énergie associés au moteur pour récupérer, lors des phases de décélération, une partie de l'énergie cinétique accumulée sur la pièce de translation lors des phases d'accélération et en ce que le système de transformation de mouvement rotation/translation est mécaniquement réversible de façon à permettre à la pièce de translation d'entraîner le moteur lors des phases de décélération pour le faire alors fonctionner en génératrice.

Lorsque le système de transformation de mouvement rotation/translation est un système vis/écrou à billes, la vis a un angle de pas suffisant (par exemple supérieur à 5°) pour permettre la récupération de l'énergie.

De préférence, la vis a plusieurs filets. Dans une forme de réalisation de l'invention, on utilise une pluralité N de moteurs électriques rotatifs pour entraîner le système vis/écrou au moyen d'une même puissance répartie sur les N moteurs, de manière à réduire les pertes d'énergie par effet Joule au moment de phases transitoires (accélération et freinage).

Le vérin est particulièrement efficace lorsqu'on utilise des moteurs alternatifs autosynchrones avec au moins un capteur angulaire monté sur la vis.

Dans ce cas, les induits statoriques sont de préférence branchés en parallèle.

Dans le système vis/écrou il est préférable de prévoir une pièce de guidage linéaire reliée à l'écrou par une liaison flottante entre la vis et l'écrou.

Selon une particularité de l'invention, il est intéressant d'utiliser des moyens de récupération d'énergie comprenant :
- une première diode anti-retour sur une ligne d'alimentation électrique du ou des moteurs ;
- au moins un condensateur connecté à ladite ligne d'alimentation électrique pour stocker l'énergie électrique fournie par le ou les moteurs, lors des phases de fonctionnement en génératrice ;
- un étage de puissance du type à quatre quadrants dans les moyens de commande, pour permettre cette récupération d'énergie.

Ce système se complète avantageusement d'une deuxième diode montée en série avec le condensateur en parallèle sur l'alimentation électrique du ou des moteurs et un interrupteur piloté par les moyens de commande, pour commander la décharge du condensateur.

Dans une première réalisation du vérin, la vis est entraînée en rotation par le ou les moteurs.

Dans une deuxième réalisation du vérin, la vis est fixe et le ou les moteurs sont placé autour de l'écrou, entrainant en rotation l'écrou.

Dans une troisième réalisation, la vis est de nouveau entraînée en rotation par le moteur, mais cette vis est creuse et le ou les moteurs sont placés à l'intérieur de celle-ci, les stators étant centraux et fixé sur un tube central.

Dans ce dernier cas, on peut prévoir une circulation de fluide de refroidissement à l'intérieur du tube central.

Le vérin peut être entouré d'un carter cylindrique avec une lumière, au travers de laquelle on guide en translation la pièce de translation.

Dans une forme de réalisation, le système de transformation de mouvement est une noise utilisant des roulements à billes inclinés roulant par frottement sur un arbre tournant.

Dans une autre forme de réalisation, le système de transformation de mouvement est une noise à galets inclinés roulant par frottement sur un arbre lisse tournant et dont l'inclinaison peut être réglable.

### LISTE DES FIGURES

L'invention, ses différentes caractéristiques et ses différentes réalisations préférentielles seront mieux comprises à la lecture de la description suivante, qui est accompagnée de quatre figures représentant respectivement :
- figure 1, le vérin selon l'invention avec son circuit de commande et de récupération d'énergie ;
- figure 2, une première réalisation mécanique du vérin selon l'invention ;
- figure 3, une deuxième réalisation mécanique du vérin selon l'invention ;
- figure 4, une troisième réalisation mécanique du vérin selon l'invention ;
- figures 5A et 5B, une quatrième réalisation mécanique du vérin selon l'invention.

### DESCRIPTION DETAILLEE DE TROIS EXEMPLES DE REALISATION DE L'INVENTION

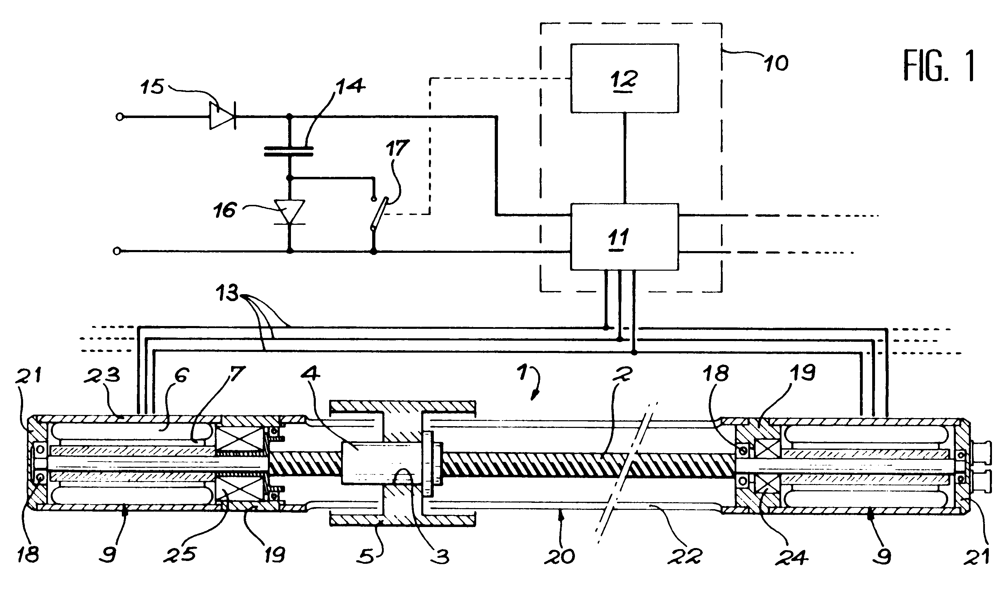

La figure 1 représente un premier exemple de réalisation d'un vérin 1, associé à ses moyens de commande 10. Le vérin 1 utilisé dans cette réalisation comprend principalement un système vis 2/écrou 4, deux moteurs 9 qui entrainent la vis 2 en rotation. L'écrou 4 constitue la pièce de translation et est bloqué en rotation grâce à une pièce de guidage 5 à laquelle il est fixé et glissant dans une lumière 22 d'un carter 20 du vérin 1.

La vis 2 est montée tournante dans deux flasques d'extrémité 21 au moyen de paliers à billes 18. Elle est également montée tournante par rapport à des bagues intermédiaires 19 au moyen d'autres paliers à billes 18. Entre les bagues intermédiaires 19 et les flasques d'extrémité 21, est placé au moins un moteur électrique rotatif 9. Chaque moteur 9 a un induit statorique fixé à un carter de moteur 23 et un aimant tournant 7 fixé à la vis 2. Les moteurs 9 sont placés aux extrémités de la vis 2, ceci étant un exemple de réalisation non limitatif.

Un carter 20 est prévu autour de la vis 2 pour relier les deux flasques d'extrémité 21 du vérin contenant les moteurs 9. Ce carter possède une lumière longitudinale 20 à travers laquelle dépasse la pièce de guidage 5 qui est reliée à l'écrou 4. Ceci confère à l'ensemble mécanique un caractère autonome et facilement utilisable et intégrable.

Selon l'invention, on utilise des moyens de récupération de l'énergie communiquée à la pièce de translation, c'est-à-dire la vis 2. Dans le cas du système vis/écrou, la vis 2 est une vis à billes, à rouleaux ou à galets ayant un grand angle de filet, c'est-à-dire supérieur à 5°. Une très grande plage de valeurs d'angle de pas peut être citée. On peut, en effet, envisager un angle de 60°. Toutefois, une réalisation a déjà été testée ; son angle de pas est égal à 32°5′.

On comprend que cette disposition permet une vitesse de déplacement rapide de l'ensemble de l'écrou 4 et de la pièce de guidage 5, mais surtout permet le phénomène de réversibilité mécanique du système vis 2/écrou 4, comme expliqué dans les paragraphes concernant l'art antérieur et le problème posé. En effet, un grand angle de pas permet d'obtenir des rendements énergétiques de conversion identiques dans les deux sens : rotation/translation et translation/rotation, de l'ordre de 0,85 à 0,90. On note également que la raideur typique d'une vis, par exemple à billes, permet d'obtenir de la part des moyens moteurs et de leur alimentation électrique une fréquence de coupure élevée.

On comprend facilement que si une charge importante est solidarisée à la pièce de guidage 5, elle-même solidarisée à l'écrou 4, lors de sa translation le long de la vis 2, quand il atteint sa vitesse maximale, cet ensemble a acquis une énergie cinétique importante du fait de sa masse et de sa vitesse. A ce sujet, on fait référence à la formule E = M.V²/2.

Il y a donc tout intérêt à tenter de récupérer la partie la plus grande possible de cette énergie, pour l'utiliser plus tard ou la restituer sous forme électrique au réseau d'alimentation électrique. La réversibilité du système écrou/vis avec un grand angle de pas permet à l'ensemble de l'écrou 4 et de sa charge de restituer cette énergie sur les flancs des filets de la vis avec un rendement tout à fait acceptable. De ce fait, lors des phases de décélération de l'écrou 4 et de sa charge, la vis qui fait action de freinage sur cet ensemble est entraînée en rotation avec un couple permettant d'entraîner le moteur électrique rotatif 9 qui fait office de génératrice d'électricité. Le courant fourni par les moteurs 9 peut être restitué à l'alimentation électrique du réseau, ou à d'autres moteurs d'un ou de plusieurs autres vérins en action à ce moment précis. Enfin, cette énergie électrique peut être stockée par un ou plusieurs condensateurs.

On comprend ainsi que le gain d'énergie apporté par la réversibilité du système mécanique utilisé apporte un avantage considérable à un tel vérin électrique utilisant un système écrou/vis à grand angle de pas. L'inconvénient apporté par ce grand angle de pas, et qui est que le vérin a une force d'autant plus faible que l'angle est important, peut être compensé en multipliant le nombre de moteurs 9. C'est pour cette raison que sur la réalisation de la figure 1, deux moteurs 9 ont été représentés à chaque extrémité de la vis à billes 2. Ceci permet de réduire l'intensité du courant électrique au démarrage par rapport à l'utilisation d'un unique moteur électrique rotatif 9. En effet, le couple à fournir se trouvant divisé par deux sur chaque moteur, le courant I à fournir à chacun des moteurs sera également divisé par deux. Or, on sait que les moteurs électriques rotatifs dissipent beaucoup d'énergie en chaleur, par effet Joule, lors des phases transitoires, et en particulier lors des démarrages et des accélérations. L'énergie perdue est égale à W = R.I².T. Dans le cas présent, le courant à fournir à chacun des moteurs se trouvant divisé par deux, on constate que l'énergie dissipée par un moteur sera divisée par quatre. En conséquence, l'utilisation de deux moteurs rotatifs électriques à la place d'un dissiperont deux fois moins de chaleur pendant les phases transitoires qu'un seul moteur électrique rotatif pour un même couple donné. On peut bien sûr envisager de multiplier le nombre de moteurs, par exemple deux à chaque extrémité de la vis 2. De manière générale, les pertes peuvent être divisées par autant de fois qu'il y a de moteurs.

On utilise de préférence dans le vérin selon l'invention des moteurs alternatifs autosynchrones. Ces moteurs fonctionnent particulièrement bien en régime transitoire ; ce qui est le cas de l'application avec le vérin selon l'invention. Ce type de moteurs nécessite la présence d'un capteur angulaire (resolver, en langue anglaise). Les principales réalisations du vérin selon l'invention prévoient de mettre ce capteur angulaire 24 couplé à un ou plusieurs moteurs 9. Dans la présente réalisation, il a été placé entre le moteur de droite et le palier 18 qui lui est conjoint.

Une référence 3 a été placée entre la pièce de translation qui est l'écrou 4 et la pièce de guidage 5. Cette référence 3 symbolise une liaison flottante. En effet, compte tenu de la technologie employée, c'est-à-dire le roulement de l'écrou 4 sur la vis 2 par l'intermédiaire de billes, ce fonctionnement entraîne de très légères oscillations de l'écrou lors de ses déplacements, c'est-à-dire une certaine instabilité par rapport à l'axe de la vis 2. Compte tenu que la pièce de guidage 5 doit avoir une position fixe par rapport à cet axe, il est nécessaire de prévoir cette liaison flottante 3. Cette dernière peut être réalisée par n'importe quel accouplement mécanique, qu'il soit radial ou axial. On peut en effet envisager un joint de cardan doublé d'un accouplement du type OLDHAM.

Sur cette réalisation de la figure 1, un frein 25 a été également positionné à côté du moteur de gauche 9. Ce frein est destiné à bloquer la vis à billes 2 au cas où un manque conséquent de courant aurait lieu lors de la manipulation d'une charge lourde suspendue. Ce frein 25 éviterait une redescente inopinée de la charge, et donc de l'écrou 4, ce qui pourrait entraîner une détérioration du vérin.

Lorsqu'il y a plusieurs moteurs, il est préférable de brancher en parallèle les induits statoriques 6 de ces moteurs 9. Ceci permet une répartition régulière des couples sur tous les moteurs et améliore la régénération d'énergie.

Les moyens de commande 10 du vérin 1 comprennent une unité de commande 12 pilotant un étage de puissance 11. Ce dernier sert à transmettre l'énergie apportée par la source de courant. Cet appareil peut être constitué par exemple d'un onduleur/redresseur polyphasé. Dans le cadre de la récupération et du stockage de l'énergie électrique par un condensateur 14, cet étage de puissance est du type "quatre quadrants" pour permettre la gestion de l'énergie électrique dans les deux sens.

Pour la récupération et le stockage de l'énergie récupérée, on utilise donc au moins un condensateur 14 branché sur les deux bornes de la source de courant, en parallèle sur la ligne d'alimentation, en courant continu ou redressé, de l'étage de puissance 11. Ce condensateur agit en tampon, en coopération avec une diode 15 placée en amont pour éviter les retours de courant vers l'alimentation. On comprend qu'une partie de l'énergie mécanique, lors d'une phase de décélération de l'écrou 4, produit une énergie électrique sous la forme d'une tension aux bornes du condensateur 14. Il est donc possible, lors de la prochaine accélération du vérin 1, d'utiliser la charge électrique stockée par le condensateur 14 pour fournir l'énergie nécessaire aux moteurs 9.

Lorsque l'on désire déclencher volontairement la décharge du condensateur 14, on peut utiliser une deuxième diode 16 placée en série avec le condensateur 14 et un interrupteur 17, placé aux bornes de cette deuxième diode 16. La fermeture de cet interrupteur 17 permet de commander la décharge du condensateur 14 vers l'étage de puissance 11. L'interrupteur 17 est alors commandé par le circuit de commande 12. Cette option doit de préférence être utilisée lorsque l'alimentation est la même pour plusieurs vérins et que ceux-ci travaillent dans le temps d'une manière relativement aléatoire, les appels de courant étant divers et eux-mêmes aléatoires.

Le condensateur 14 peut être de préférence un condensateur électrolytique industriel à haute capacité, par exemple un condensateur de 6 800 µF, fonctionnant entre 280 et 350 Volts et pouvant emmagasiner environ 150 J dans un volume de moins d'1 l. Cette énergie correspond à une masse de 300 kg, freinée d'1 m/s à l'arrêt. On note de plus que les moteurs autosynchrones fonctionnent à des vitesses relativement élevées et ont un trés bon fonctionnement aux alentours de 300 Volts, cette tension étant compatible avec celle du condensateur précédemment décrite.

L'exemple décrit sur cette figure 1 permet de développer avec une vis de diamètre de 20 mm et dont l'angle de pas est de 32,5°, une force statique d'environ 175 daN et une force impulsionnelle au moins cinq fois plus importante. L'efficacité de la récupération et de la régénération de l'énergie est estimée à un minimum de 45 %. La vis à billes utilisée permet à l'écrou d'atteindre une vitesse de 2 m/s.

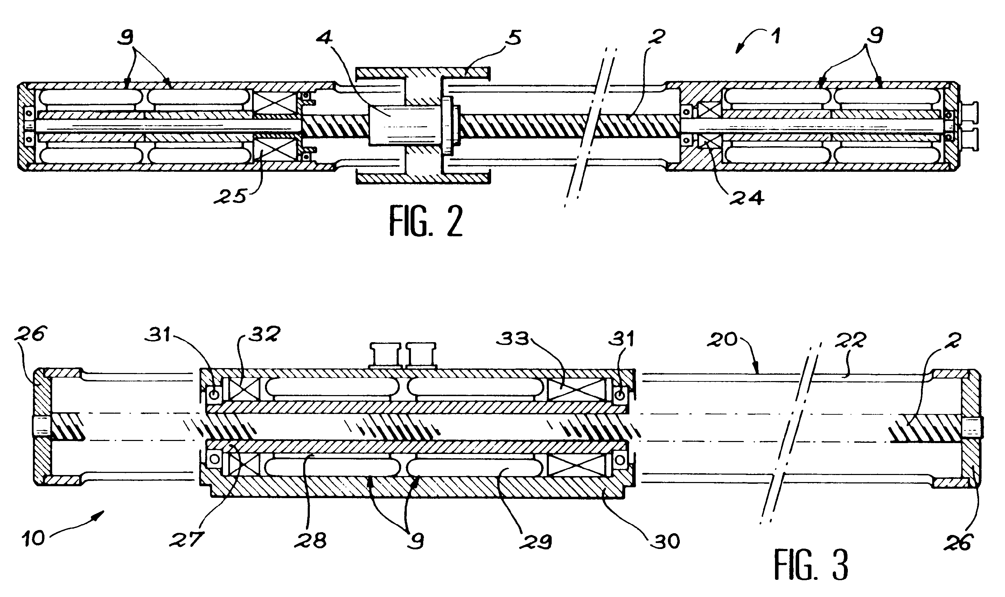

En référence à la figure 2, il peut s'avérer avantageux de disposer quatre moteurs 9 pour un seul vérin 1. De préférence, ces moteurs 9 sont disposés par paire à chaque extrémité de la vis 2. Les forces obtenues sont bien évidemment doublées. On peut même signaler que l'efficacité de la récupération de l'énergie dépasse au minimum 55 %.

Ainsi pour un diamètre donné du vérin 1, il est possible d'augmenter l'effort disponible, sans ajouter d'éléments mécaniques extérieurs spéciaux, ni sans changer de gabarit du vérin. De manière générale, si on dispose à chaque extrémité N moteurs 9, on dispose de deux N moteurs qui se répartissent les forces totales F. Il en est de même pour les courants d'induit. Cette division des courants à chacun des moteurs 9 de mêmes caractéristiques (constante K et résistance) amène une réduction considérable de la puissance dissipée par l'effet Joule. En effet, si I est le courant nécessaire pour alimenter un unique moteur destiné à fournir un effort F donné, I/N est le courant nécessaire à envoyer à chaque moteur d'un groupe de N moteurs, destiné à fournir le même effort F. Or, la dissipation de l'énergie par effet Joule dans un moteur est proportionnelle à (I/N)². En conséquence, dans le cas de l'utilisation de N moteurs, la dissipation de l'énergie sera égale à N.(I²/N²). On constate donc que l'énergie dissipée est N fois plus petite que l'énergie dissipée par un seul moteur. Comme ces pertes ont essentiellement lieu en régime transitoire et que le vérin selon l'invention est destiné à fonctionner en accélération et en décélération, on comprend l'énergie économisée par l'utilisation de N moteurs par rapport à l'utilisation d'un moteur individuel.

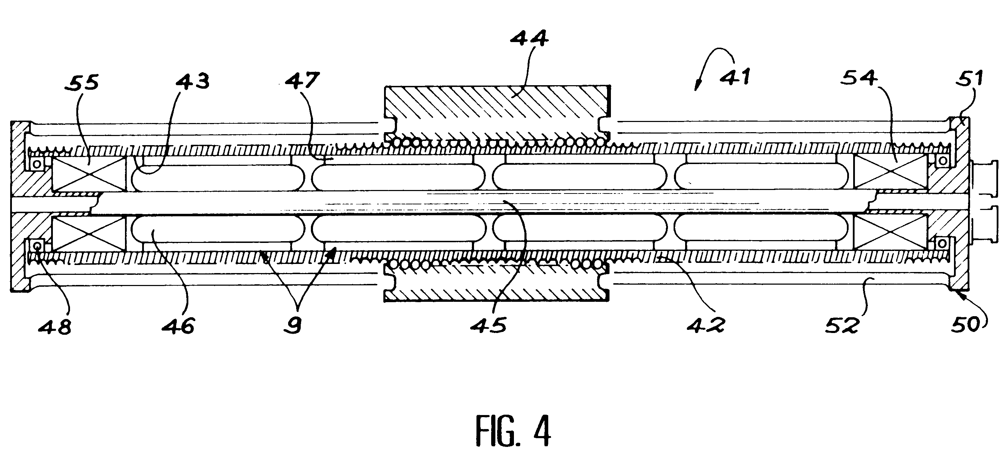

En référence à la figure 3, une variante de réalisation prévoit de fixer la vis 2 dans les flasques d'extrémité 26 du vérin 1. Dans ce cas, l'écrou 27 est un peu plus long et est entouré d'un ou de plusieurs moteurs 9 dont l'aimant 28 est fixé à l'écrou 27, alors que l'induit statorique 29 est fixé à une bague 30 qui est bloquée en translation, par exemple dans la lumière 22 du carter 20. Des paliers à billes 31 sont disposés aux extrémités de l'écrou 27 pour permettre sa rotation par rapport à la bague 30. Des logements peuvent être prévus également pour le capteur angulaire 32 et le frein 33. Le principe de récupération de l'énergie, avec ou sans stockage de l'énergie électrique dans un condensateur, est le même que celui utilisé dans le vérin de la figure précédente.

En référence à la figure 4, une troisième variante prévoit d'utiliser une vis 42 creuse dans un vérin 41. Dans ce cas, les moteurs 9 sont placés à l'intérieur de cette vis tubulaire 42. Les aimants 47 sont fixés à la paroi interne 43 de la vis 42, tandis que les induits statoriques 46 sont placés à l'intérieur des aimants 47 et sont fixés par leur diamètre interne à un tube fixe 45. Des paliers 48 permettent la rotation de la vis 42 autour du tube 45. L'écrou 44 est monté autour de la vis 42, mais est bloqué en rotation dans la lumière 52 du carter 50. Aux extrémités, on peut prévoir la place pour loger un frein 55 et un capteur angulaire 54.

On constate que dans cette réalisation de la figure 4, il est possible de placer un nombre maximal de moteurs 9 à l'intérieur de la vis 42. En effet, si une utilisation quelconque nécessite un vérin d'une longueur maximale d'1 m, la plus grande partie de la vis, c'est-à-dire 80 cm, pourra être utilisée pour y loger des moteurs. De plus, le tube central 45 peut permettre la circulation d'un liquide réfrigérant, tel que de l'eau pour permettre d'évacuer les calories dégagées par les induits statoriques 46 des moteurs 9. Un avantage supplémentaire de cette réalisation concerne les paliers à billes 48 qui sont d'un diamètre plus important, donc d'une durée de vie théoriquement plus longue.

On peut également envisager l'usage de types de vérins mécaniques autres que ceux utilisant le système vis/écrou. En effet, un vérin linéaire dénommé "ROH'LIX", commercialisé aux Etats-Unis d'Amérique par ZERO-MAX, une entreprise de Barry WRIGHT, utilise des galets qui roulent par frottement sur un arbre lisse tournant. Les galets sont inclinés et permettent de glisser en cas de surchage.

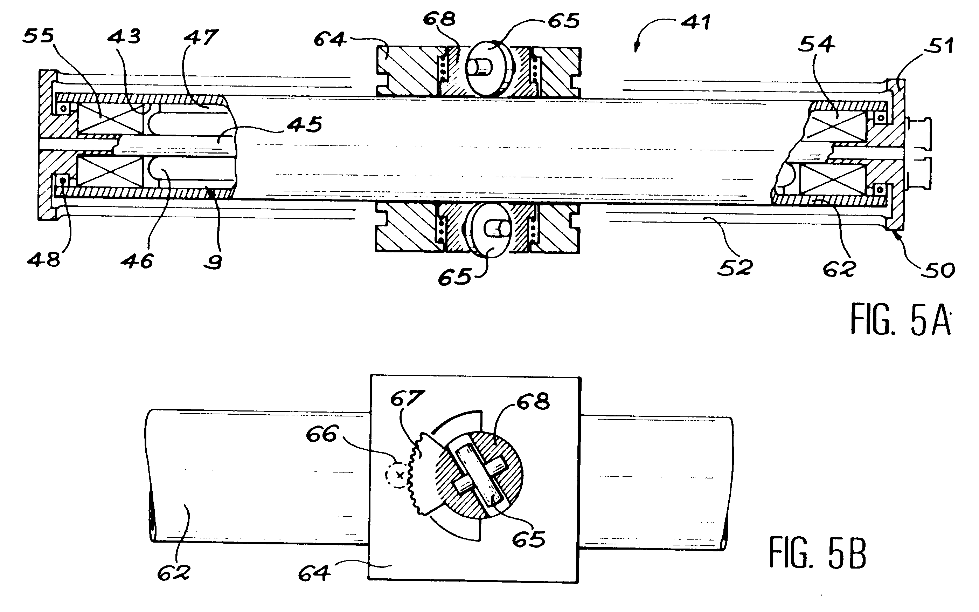

Un exemple de réalisation est représenté par les figures 5A (coupe frontale) et 5B (vue de dessus). Le palier est constitué d'une noix 64 dans laquelle sont montés tournants plusieurs galets 65, de manière à ce que l'enveloppe intérieure qu'ils définissent corresponde à la surface externe de l'arbre lisse 62. Leur montage peut être obtenu avec une pièce de pivotement 68 montée tournante dans la noix 64, perpendiculairement à l'axe de l'arbre lisse 62 et actionnée par un moteur 66 agissant sur une crémaillère 67 en arc de cercle.

Ce cas d'utilisation d'un système de conversion par arbre lisse 62 et galets presseurs inclinés 65 et d'une motorisation incluse dans l'arbre 62 comporte de nouveaux avantages. En effet, l'idée d'augmenter le diamètre de la vis de manière à y loger la motorisation (vis creuse), conduit à des systèmes vis-écrou à billes d'une fortes inertie, donc absorbant une énergie cinétique importante en pure perte dans les phases d'accélération. A ce sujet, le système à arbre lisse 62 et galets presseurs 65 peut devenir plus intéressant que le système vis à billes car les contraintes technologiques sont différentes. On peut en effet facilement réaliser un arbre lisse de grand diamètre et de faible masse (inertie), par exemple en alliage léger ou en composite, éventuellement durci superficiellement pour résister aux pressions élevées appliquées par les galets. Les moteurs sont alors inversés et placés à l'intérieur. Le tube lisse 62, creux est en matériau léger (genre alliage léger ou matériau composite, genre fibre de carbone) durci superficiellement (par exemple dépôt de chrome). Le système mobile portant des galets presseurs 65 se translate concentriquement au tube 62. L'inclinaison des galets 65 peut être fixe ou réglable, éventuellement pendant le mouvement (au moyen d'un système de commande), de manière à pouvoir changer la valeur du pas.

Une application spéciale est envisagée pour les robots marcheurs ou suspensions dynamiques de véhicules à roues. Le système permet d'adapter les caractéristiques de l'actionneur en fonction des allures : forces élevées, vitesses faibles ou forces faibles et mouvements alternatifs rapides avec possibilité de récupération d'énergie.

Il est également avantageux d'utiliser des systèmes vis/écrou à galets ou à rouleaux en remplacement du système vis/écrou à billes.

Un autre type de vérin linéaire est commercialisé par AMACOIL aux Etats-Unis d'Amérique sous la dénomination "UHING LINEAR DRIVES". Ce dispositif utilise des roulements à billes inclinés placés dans une noix et dont les bagues intérieures sont en appui sur l'arbre lisse tournant.

Les différents types de systèmes mécaniques énoncés ici pour transformer un mouvement de rotation en un mouvement de translation ne sont que des exemples. La revendication 1 annexée a pour objet de protéger l'utilisation de tous les types de dispositif de transformation du mouvement de rotation en translation permettant la récupération d'énergie.

### AVANTAGES DE L'INVENTION

Le vérin selon l'invention apporte les avantages suivants :
- compacité de l'ensemble du vérin ;
- nombre de pièces mécaniques en mouvement réduit au minimum ;
- pas d'utilisation de réducteur ;
- puissance variable, pour un gabarit donné, en fonction du nombre de moteurs utilisés ;
- aucun système mécanique n'est ajouté ;
- la multiplication des moteurs permet d'obtenir des efforts élevés sans changer la section du vérin et permet, à charge identique, de diviser les courants moteurs sur chaque moteur. Ceci permet de réduire grandement la valeur des pertes par effet Joule. Dans ce cas, si on limite l'effort développé à celui produit par un seul moteur, le rendement du vérin s'en trouve largement amélioré, que ce soit en phase réceptrice d'énergie électrique ou en phase génératrice d'énergie électrique ;
- capacité en efforts statiques et dynamiques très supérieure au moteur linéaire de même gabarit ;
- qualité dynamique élevée grâce à une réponse très linéaire du système dans lequel les frottements secs et visqueux sont négligeables ;
- exigence de puissance électrique limitée compte tenu de la récupération de l'énergie, dans le cas d'utilisation en unité multiple, par exemple un parc de robots important ;
- dans le cas d'une utilisation sur un véhicule électrique avec une source d'énergie embarquée, prolongation de l'autonomie du véhicule et élimination des chaleurs dissipées sur les résistances de dissipation actuellement utilisées, grâce au système de récupération d'énergie ;
- avec plusieurs moteurs en parallèle, redondance par rapport au fonctionnement du dispositif, ce qui est un avantage pour l'utilisation dans les équipements aériens et spatiaux.

En conclusion, le vérin selon l'invention est un système compact, simple, sans réducteur, donnant des forces de maintien et transitoires élevées, compte tenu du gabarit du vérin, tout en présentant un compromis intéressant entre une fréquence de coupure élevée grâce à la raideur de la vis à billes ou à rouleaux ou à galets et une réversibilité et un rendement énergétique très élevés.

La multiplication des moteurs permet d'obtenir des efforts élevés sans changer la section du vérin et permet, à charge identique, de réduire les pertes par effet Joule, contribuant ainsi à l'amélioration du rendement dans les phases transitoires.

### APPLICATIONS ENVISAGEES

De nombreuses applications sont envisagées, par exemple :
- robots autonomes de type marcheur ou à suspension contrôlée dynamiquement ;
- simulateurs de vol, ou commandes de vol, remplaçant avantageusement certains vérins hydrauliques ;
- véhicules autonomes électriques avec suspension asservie ;
- positionnements asservis de matériels de visée ou de tir sur des véhicules armés et mobiles.

## Revendications

1. Vérin électrique comprenant au moins un moteur électrique rotatif (9) qui entraîne en rotation un système de transformation de mouvement rotation/translation pour translater une pièce de translation (4; 27; 44) telle qu'un écrou, des moyens de commande (10) du moteur (9) pour entraîner le système de transformation de mouvement avec des phases d'accélération et de décélération, caractérisé en ce qu'il comprend des moyens de récupération d'énergie associés au moteur (9) pour récupérer, lors des phases de décélération, une partie de l'énergie cinétique accumulée sur la pièce de translation (4; 27; 44) lors des phases d'accélération, et en ce que le système de transformation de mouvement rotation/translation est mécaniquement réversible de façon à permettre à la pièce de translation d'entraîner le moteur lors des phases de décélération pour le faire alors fonctionner en génératrice.

2. Vérin selon la revendication 1, caractérisé en ce que le système de transformation de mouvement rotation/translation est un système vis/écrou à billes (2, 4, 27, 42, 44), la vis (2, 42) ayant un angle de pas suffisant, par exemple supérieur à 5°, pour permettre la récupération de l'énergie.

3. Vérin selon la revendication 2, caractérisé en ce que la vis (2, 42) est une vis à plusieurs filets.

4. Vérin selon la revendication 2 ou 3, caractérisé en ce qu'il comprend une pluralité N de moteurs électriques rotatifs (9) pour entraîner le système vis (2, 42)/écrou (4, 27, 44) au moyen d'une même puissance répartie sur les N moteurs (9), de manière à réduire les pertes d'énergie par effet Joule au moment de phases transitoires.

5. Vérin selon l'une quelconque des revendications 2 à 4, caractérisé en ce que les moteurs (9) sont du type alternatif autosynchrone avec au moins un capteur angulaire (24, 32, 44) monté sur la vis (2, 42).

6. Vérin selon la revendication 5, caractérisé en ce que les induits statoriques (6, 29, 46) sont branchés en parallèle.

7. Vérin selon l'une quelconque des revendications précédentes, caractérisé en ce qu'il comprend une pièce de guidage linéaire (5) reliée à la pièce de translation (4, 27, 44) par une liaison flottante.

8. Vérin selon l'une quelconque des revendications précédentes, caractérisé en ce que les moyens de récupération d'énergie comprennent :
- une première diode anti-retour (15) sur une ligne d'alimentation électrique du ou des moteurs;
- au moins un condensateur (14), connecté à ladite ligne d'alimentation électrique, pour stocker l'énergie électrique fournie par le ou les moteurs (9) lors des phases de fonctionnement en génératrice ;
- un étage de puissance (11) du type à quatre quadrants pour permettre cette récupération d'énergie.

9. Vérin selon la revendication 8, caractérisé en ce qu'il comprend une deuxième diode (16) montée en série avec le condensateur (14) en parallèle sur l'alimentation du ou des moteurs et un interrupteur (17) piloté par les moyens de commande (10) pour commander la décharge du condensateur (14).

10. Vérin selon l'une quelconque des revendications 2 à 6, caractérisé en ce que la vis (2, 42) est entraînée en rotation par le ou les moteurs (9).

11. Vérin selon l'une quelconque des revendications 2 à 6, caractérisé en ce que la vis (2, 42) est fixe, le ou les moteurs (9) étant placés autour de l'écrou (4, 27, 44) entraînant en rotation cet écrou.

12. Vérin selon la revendication 10, caractérisé en ce que la vis (2, 42) est creuse, le ou les moteurs (9) étant placés à l'intérieur de cette vis, les induits statoriques (6, 29, 46) étant centraux et fixés sur un tube central (45).

13. Vérin selon la revendication 12, caractérisé en ce qu'une circulation de fluide de refroidissement est prévue dans le tube central (45).

14. Vérin selon l'une quelconque des revendications précédentes, caractérisé en ce qu'il comprend un carter cylindrique (20, 50), avec une lumière (22, 52) au travers de laquelle on guide en translation la pièce de translation (4, 27, 44).

15. Vérin selon la revendication 1, caractérisé en ce que le système de transformation de mouvement est une noix utilisant des roulements à billes inclinés roulant par frottement sur un arbre tournant.

16. Vérin selon la revendication 1, caractérisé en ce que le système de transformation de mouvement est une noix (64) à galets (65) roulant par frottement sur un arbre tournant (62).

17. Vérin selon la revendication 16, caractérisé en ce que l'inclinaison des galets (65) est variable et actionnée par un moteur électrique (66) piloté par un système de commande extérieur.

## Claims

1. Electric jack having at least one rotary electric motor (9), which rotates a rotation/translation movement transformation system for translating a translation part (4, 27, 44) such as a nut, means (10) for the control of the motor (9) for driving the movement transformation system with acceleration and deceleration phases, characterized in that it comprises energy recovery means associated with the motor (9) for recovering, during deceleration phases, part of the kinetic energy accumulated on the translation part (4, 27, 44) during the acceleration phases, and in that the rotation/ translation movement transformation system is mechanically reversible, so as to enable the translation part to drive the motor during the deceleration phases to make it function as a generator.

2. Jack according to claim 1, characterized in that the rotation/translation movement transformation system is a ball nut/screw system (2, 4, 27, 42, 44), the screw (2, 42) having an adequate pitch angle, e.g. exceeding 5° to permit the energy recovery.

3. Jack according to claim 2, characterized in that the screw (2, 42) is a multi-thread screw.

4. Jack according to claim 2 or 3, characterized in that it comprises a plurality N of rotary electric motors (9) for driving the nut (4, 27, 44)/screw (2, 42) system by means of the same power distributed over the N motors (9), so as to reduce the energy losses by the Joule effect during the transient phases.

5. Jack according to any one of the claims 2 to 4, characterized in that the motors (9) are of the auto-synchronous alternating type with at least one resolver (24, 32, 44) mounted on the screw (2, 42).

6. Jack according to claim 5, characterized in that the stator armatures (6, 29, 46) are connected in parallel.

7. Jack according to any one of the preceding claims, characterized in that it comprises a linear guiding part (5) connected to the translation part (4, 27, 44) by a floating connection.

8. Jack according to any one of the preceding claims, characterized in that the energy recovery comprises a first non-return diode (15) on an electric supply line of the motor or motors, at least one capacitor (14), connected to the electric supply line, for storing the electric energy supplied by the motor or motors (9) during generator operating phases and a four quadrant-type power stage (11) in order to permit said energy recovery.

9. Jack according to claim 8, characterized in that it comprises a second diode (16) connected in series with the capacitor (14) in parallel on the supply of the motor or motors and a switch (17) controlled by the control means (10) for controlling the discharge of the capacitor (14).

10. Jack according to any one of the claims 2 to 6, characterized in that the screw (2, 42) is rotated by the motor or motors (9).

11. Jack according to any one of the claims 2 to 6, characterized in that the screw (2, 42) is fixed, the motor or motors (9) being placed around the nut (4, 27, 44) rotating the said nut.

12. Jack according to claim 10, characterized in that the screw (2, 42) is hollow, the motor or motors (9)) being positioned within the said screw, the stator armatures (6, 29, 46) being central and fixed to a central tube (45).

13. Jack according to claim 12, characterized in that a cooling fluid circulation is provided in the central tube (45).

14. Jack according to any one of the preceding claims, characterized in that it comprises a cylindrical casing (20, 50) with an opening (22, 52) through which is guided in translation the translation part (4, 27, 44).

15. Jack according to claim 1, characterized in that the movement transformation system is a yoke using inclined ball-bearings rolling by friction on a rotary shaft.

16. Jack according to claim 1, characterized in that the movement transformation system is a yoke (64) with rollers (65) rolling by friction on a rotary shaft (62).

17. Jack according to claim 16, characterized in that the inclination of the rollers (65) is variable and actuated by an electric motor (66) controlled by an external control system.

## Patentansprüche

1. Elektrischer Wandler, umfassend wenigstens einen elektrischen Rotationsmotor (9), der ein Rotations-/Translations-bewegung-Umwandlungssystem in Rotation versetzt, um ein Translationsteil (4; 27; 44) wie z.B. eine Mutter zu verschieben, Steuerungseinrichtungen (10) des Motors (9), um das Bewegungs- umwandlungssystem mit Beschleunigungs- und Verzögerungsphasen anzutreiben,
**dadurch gekennzeichnet**, daß es dem Motor (9) zugeordnete Einrichtungen zur Energierückgewinnung umfaßt, um während der Verzögerungsphasen einen Teil der in dem Translationsteil (4; 27; 44) während der Beschleunigungsphasen gespeicherten kinetischen Energie zurückzugewinnen,
und dadurch, daß das Rotations-/Translationsbewegung-Umwandlungssystem mechanisch umschaltbar ist, derart, daß das Translationsteil während der Verzögerungsphasen den Motor antreibt, um ihn als Generator funktionieren zu lassen.

2. Wandler nach Anspruch 1, dadurch gekennzeichnet, daß das Rotations-/Translationsbewegung-Umwandlungssystem ein Spindel/Mutter-Kugelsystem ist (2, 4, 27, 42, 44), wobei die Spindel (2, 42) einen ausreichenden Steigungswinkel hat, z.B. größer als 5°, um die Energierückgewinnung zu ermöglichen.

3. Wandler nach Anspruch 2, dadurch gekennzeichnet, daß die Spindel (2, 42) eine mehrgängige Spindel ist.

4. Wandler nach Anspruch 2 oder 3, dadurch gekennzeichnet, daß er eine Vielzahl N elektrischer Rotationsmotoren (9) umfaßt, um das Spindel(2,42)/Mutter(4,27,44)-System mit derselben Leistung, verteilt auf die N Motoren (9), so anzutreiben, daß sich die Energieverluste durch Stromwärme während der Übergangsphasen reduzieren.

5. Wandler nach einem der Ansprüche 2 bis 4, dadurch gekennzeichnet, daß die Motoren (9) selbstsynchronisierende Wechselstrommotoren sind mit wenigstens einem Winkelmeßgeber (24, 32, 44), angebracht auf der Spindel (2, 42).

6. Wandler nach Anspruch 5, dadurch gekennzeichnet, das die ruhenden Anker (6, 29, 46) parallelgeschaltet sind.

7. Wandler nach einem der vorhergehenden Ansprüche, dadurch gekennzeichnet, daß er ein Linearführungsteil (5) umfaßt, verbunden mit dem Translationsteil (4, 27, 44) durch eine lose Verbindung.

8. Wandler nach einem der vorhergehenden Ansprüche, dadurch gekennzeichnet, daß die Energierückgewinnungseinrichtungen umfassen:
- eine erste Antiretour-Diode (15) in einer elektrischen Versorgungsleitung des Motors oder der Motoren;
- wenigstens einen Kondensator (14), an die elektrische Versorgung angeschlossen, um die elektrische Energie zu speichern, die von dem Motor oder den Motoren (9) während der Generatorbetriebsphasen geliefert wird;
- eine Leistungsstufe (11) des Vierquadrantentyps, um diese Energierückgewinnung zu ermöglichen.

9. Wandler nach Anspruch 8, dadurch gekennzeichnet, daß er eine zweite Diode (16) umfaßt, in Serie geschaltet mit dem Kondensator (14), parallel zur Versorgung des Motors oder der Motoren, und einen Schalter (17), gesteuert durch die Steuerungseinrichtungen (10), zur Entladung des Kondensators (14).

10. Wandler nach einem der Ansprüche 2 bis 6, dadurch gekennzeichnet, daß die Spindel (2, 42) durch den Motor oder die Motoren (9) angetrieben wird.

11. Wandler nach einem der Ansprüche 2 bis 6, dadurch gekennzeichnet, daß die Spindel (2, 42) feststehend ist, wobei der Motor oder die Motoren (9) um die Mutter (4, 27, 44) herum angeordnet sind und diese Mutter antreiben.

12. Wandler nach Ansprüch 10, dadurch gekennzeichnet, daß die Spindel (2, 42) hohl ist, wobei der Motor oder die Motoren (9) im Innern dieser Spindel angeordnet sind und die ruhenden Anker (6, 29, 46) zentral sind und befestigt an einem zentralen Rohr (45).

13. Wandler nach Anspruch 12, dadurch gekennzeichnet, daß eine Kühlfluid-Zirkulation in dem zentralen Rohr (45) vorgesehen ist.

14. Wandler nach einem der vorhergehenden Ansprüche, dadurch gekennzeichnet, daß er ein zylindrisches Gehäuse (20, 50) umfaßt, mit einem Schlitzloch (22, 52), durch das das Translationsstück (4, 27, 44) bei der Verschiebung geführt wird.

15. Wandler nach Anspruch 1, dadurch gekennzeichnet, daß das Bewegungsumwandlungssystem eine Einrichtung (noix) mit Schrägkugellagern ist, die durch Reibung auf einer drehenden Welle rollen.

16. Wandler nach Anspruch 1, dadurch gekennzeichnet, daß das Bewegungsumwandlungssystem eine Einrichtung (noix) (64) mit Rollen (65) ist, die durch Reibung auf einer drehenden Welle (62) rollen.

17. Wandler nach Anspruch 16, dadurch gekennzeichnet, daß die Neigung der Rollen (65) verstellbar ist und verstellt wird durch einen elektrischen Motor (66), gesteuert durch ein externes Steuerungssystem.
